(19) Europäisches Patentamt
European Patent Office
Office européen des brevets

(11) **EP 4 195 487 A1**

(12) **EUROPÄISCHE PATENTANMELDUNG**

(43) Veröffentlichungstag:
**14.06.2023   Patentblatt 2023/24**

(51) Internationale Patentklassifikation (IPC):
**H02M 7/219** (2006.01)       **H02M 1/00** (2006.01)
**H02M 5/458** (2006.01)       **H02P 25/22** (2006.01)
**H02P 27/10** (2006.01)

(21) Anmeldenummer: 22191995.4

(22) Anmeldetag: **24.08.2022**

(52) Gemeinsame Patentklassifikation (CPC):
**H02M 7/219; H02M 1/0043;** H02M 5/4585;
H02P 25/22; H02P 27/10; H02P 2101/15;
H02P 2205/01

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **09.12.2021   EP 21213468**

(71) Anmelder: **Wobben Properties GmbH
26607 Aurich (DE)**

(72) Erfinder:
• **Rosso, Roberto
26605 Aurich (DE)**
• **Warsinski, Johannes
26624 Südbrookmerland (DE)**

(74) Vertreter: **Eisenführ Speiser
Patentanwälte Rechtsanwälte PartGmbB
Postfach 10 60 78
28060 Bremen (DE)**

(54) **VERFAHREN ZUM STEUERN EINES AKTIVEN GLEICHRICHTERS EINER WINDENERGIEANLAGE**

(57)    Verfahren zum Steuern eines Umrichters (130), bevorzugt eines generatorseitigen, aktiven Gleichrichters (132', 132") eines Leistungsumrichters einer Windenergieanlage (100), umfassend: Vorgeben eines Sollwertes (S*) für den Umrichter (130); Vorgeben eines Trägersignals (R) für den Umrichter (130); Erfassen eines Istwertes (S); Ermitteln einer Verzerrungsgröße (E) aus dem Sollwert (S*) und dem Istwert (S); und Bestimmen von Treibersignalen (T) für den Umrichter in Abhängigkeit der Verzerrungsgröße (E) und des Trägersignals (R).

Fig. 4C

**Beschreibung**

Die vorliegende Erfindung betrifft ein Verfahren zum Steuern eines Umrichters, bevorzugt eines generatorseitigen, aktiven Gleichrichters eines Leistungsumrichters einer Windenergieanlage.

Im Bereich der Erzeuger elektrischer Energie, insbesondere bei Windenergie- oder Photovoltaikanlagen, werden üblicherweise Umrichter zur Stromerzeugung verwendet.

Häufig sind die Umrichter dabei als sogenannte Umrichtersysteme ausgeführt, d.h. mehrere Umrichter bzw. Umrichtermodule bzw. Umrichtersubmodule werden, bevorzugt parallel, zusammengeschaltet, insbesondere um ein Umrichersystem höherer Leistung auszubilden.

Die Ansteuerung der Umrichter bzw. der Umrichtersysteme kann dabei mittels unterschiedlichster Verfahren erfolgen, bspw. mittels eines Hystereverfahrens, wie dem Toleranzbandverfahren, oder mittels eines Modulationsverfahrens, wie der Pulsdauermodulation.

Die Hystereverfahren sind üblicherweise als direkte Stromregelverfahren mit geschlossenem Regelkreis ausgeführt und weisen eine schnelle Dynamik und hohe Robustheit, bei insbesondere nicht-linearem Regelverhalten und breitbandigen Rauschen, auf.

Die Modulationsverfahren weisen üblicherweise eine feste Taktfrequenz auf, die zu Oberschwingungen mit vielfacher der Modulationsfrequenz führen, die oft im Hörbereich liegen. Durch Wahl entsprechend höherer Modulationsfrequenzen kommt es hingegen zu Problemen bei der elektromagnetischen Verträglichkeit (kurz: EMV) und zu höheren Belastungen innerhalb der Umrichter bzw. Umrichtersysteme.

Nachteilig bei bisher bekannten Verfahren sind insbesondere das breitbandige Rauschen einerseits und die mangelnde Dynamik und hörbare Oberschwingungen andererseits.

Aufgabe der vorliegenden Erfindung ist es daher wenigstens eines der obengenannten Probleme zu adressieren. Insbesondere soll ein Verfahren zum Steuern von Umrichtern, insbesondere aktiven Gleichrichtern einer Windenergieanlage, bereitgestellt werden, welches nur einem geringen Stromripple im Generator aufweist und somit zu geringen Kraftschwankungen im Luftspalt des Generators und weniger Geräuschen führt.

Erfindungsgemäß wird somit ein Verfahren zum Steuern eines Umrichters, bevorzugt eines generatorseitigen, aktiven Gleichrichters eines Leistungsumrichters einer Windenergieanlage, vorgeschlagen, umfassend die Schritte: Vorgeben eines Sollwertes für den Umrichter; Vorgeben eines Trägersignals für den Umrichter; Erfassen eines Istwertes; Ermitteln einer Verzerrungsgröße aus dem Sollwert und dem Istwert; und Bestimmen von Treibersignalen für den Umrichter in Abhängigkeit der Verzerrungsgröße und des Träger-signals.

Es wird also insbesondere ein Verfahren zum Steuern eines aktiven Gleichrichters einer Windenergieanlage vorgeschlagen, welches die Treibersignale für den aktiven Gleichrichter, insbesondere direkt, aus einer Messabweichung ermittelt, bevorzugt ohne dabei zusätzliche Spannungssollwerte zu berechnen, wie bspw. bei üblichen Pulsdauermodulationen (engl. PWM).

Vorteilhaft bei dem vorgeschlagenen Verfahren ist insbesondere, dass generelle Systemparameter nicht zwingend notwendig sind, da die Treibersignale bevorzugt aus einer Messabweichung ermittelt werden. Hierdurch kann das vorgeschlagene Verfahren einfacher parametriert und implementiert werden als bspw. bisher bekannte PWM-Verfahren.

Gemäß einer Ausführungsform wird zunächst ein Sollwert sowie ein, insbesondere zusätzliches, Signal für den Umrichter vorgegeben.

Der Sollwert ist bevorzugt eine Sollvorgabe für eine physikalische Größe, wie bspw. einem, vom Umrichter zu erzeugenden Strom. Bevorzugt ist der Sollwert ein Strom-Sollwert für einen, durch einen aktiven Gleichrichter zu erzeugenden Wechselstrom, bspw. in Form eines Wertes oder eine Funktion.

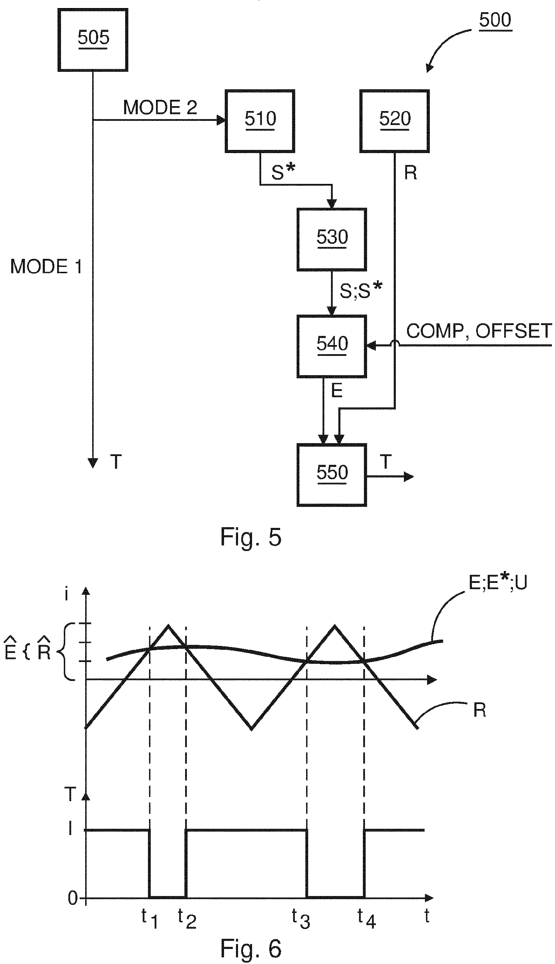

Das, insbesondere zusätzliche, Trägersignal ist bspw. ein Vergleichs- bzw. Abgleichsignal oder ein Rampensignal. Bevorzugt ist das Trägersignal ein Dreiecksignal. Das Trägersignal wird dabei insbesondere für einen Abgleich verwendet, bevorzugt um die Treibersignale für den Umrichter zu bestimmen, beispielsweise wie in Fig. 6 gezeigt.

Weiter bevorzugt ist die Amplitude und/oder die Frequenz und/oder die Periode und/oder die Breite des Trägersignals einstellbar. Besonders bevorzugt wird die Amplitude und/oder die Frequenz und/oder die Periode und/oder die Breite des Trägersignals im laufenden Betrieb variiert, insbesondere um eine sogenannte Verschmierung des Frequenzbandes zu erzeugen.

Die Frequenz des Trägersignals wird bevorzugt in Abhängigkeit von strukturdynamischen Auslegungen gewählt, bspw. um die Effekte auf die Schallemissionen eines entsprechenden Generators zu minimieren. Wird das hierin beschriebene Verfahren bspw. zum Steuern eines aktiven Gleichrichters verwendet, der mit einem Generator verbunden ist, so weist das Trägersignal bevorzugt eine Frequenz zwischen 200Hz und 2500Hz auf, weiter bevorzugt zwischen 500Hz und 1500HzIn einem weiteren Schritt wird dann ein Istwert erfasst und mit dem Sollwert abgeglichen, insbesondere um eine Verzerrungsgröße zu ermitteln.

Der Istwert ist bevorzugt eine physikalische Größe, die insbesondere zum Sollwert korrespondiert, wie bspw. dem, vom Umrichter erzeugten Strom. Bevorzugt ist der Istwert ein Strom-Istwert, insbesondere eines, durch einen aktiven Gleichrichter erzeugten Wechselstromes.

Die, aus Sollwert und Istwert, bspw. durch Differenz, ermittelte Verzerrungsgröße kann auch als Mess- oder Regelabweichung bezeichnet werden.

Das Verfahren weist also wenigstens eine Regelschleife auf und ist bevorzugt als direktes Stromregelverfahren ausgebildet, insbesondere um einen dreiphasigen Wechselstrom für einen Stator eines Generators einer Windenergieanlage zu erzeugen.

Die Verzerrungsgröße wird dabei bevorzugt aus einer Differenz zwischen Sollwert und Istwert gebildet und kann, sofern Sollwert und Istwert einen Strom abbilden, auch als Verzerrungsstrom bezeichnet werden.

Die Verzerrungsgröße kann also ebenfalls ein Wert oder eine Funktion sein, insbesondere ist die Verzerrungsgröße ein über die Zeit veränderlicher Differenzstrom, der eine Differenz zwischen Soll-Strom und Ist-Strom eines Umrichters, insbesondere eines aktiven Gleichrichters, abbildet.

Aus der Verzerrungsgröße und dem Trägersignal werden dann die Treibersignale für den Umrichter, insbesondere für die Schalter des Umrichters, bevorzugt die Schalter des aktiven Gleichrichters, bestimmt. Beispielsweise ist der aktive Gleichrichter als B6C-Gleichrichter mit sechs Schaltern, insbesondere Leistungsschaltern, ausgebildet, dann werden entsprechend sechs Treibersignale bestimmt, für jeden Schalter ein Treibersignal.

Die Treibersignale können bspw. dadurch bestimmt werden, dass die Verzerrungsgröße mit dem Trägersignal abgeglichen wird. Hierfür wird beispielsweise die Verzerrungsgröße zu einem Modulationssignal aufintegriert und mit dem Trägersignal abgeglichen, wobei die Schnittpunkte zwischen dem Modulationssignal und dem Trägersignal einen Trigger zum Erzeugen eines entsprechenden Treibersignals bilden.

Es wird also insbesondere vorgeschlagen, dass die Treibersignale durch Abgleich der Verzerrungsgröße und/oder einer erweiterten Verzerrungsgröße und/oder eines Modulationssignals mit dem Trägersignal erzeugt werden.

Sofern das Trägersignal bspw. ein Rampensignal ist, ist das Verfahren als sogenanntes Rampenvergleichsverfahren (engl. ramp comparison control) ausgeführt.

Die Treibersignale werden also insbesondere dazu verwendet, die Schalter des Umrichters, insbesondere die Schalter des aktiven Gleichrichters zu schalten, bevorzugt um einen elektrischen Wechselstrom im Stator des Generators der Windenergieanlage zu erzeugen, der im Wesentlichen dem Sollwert, also einem Sollstrom, entspricht.

Das hierin beschriebene Verfahren umfasst also bevorzugt auch den Schritt: Schalten wenigstens eines Schalters des Umrichters, insbesondere des aktiven Gleichrichters, in Abhängigkeit der Treibersignale, insbesondere so, dass der Umrichter, insbesondere der aktive Gleichrichter, einen elektrischen Wechselstrom im Stator des Generators der Windenergieanlage erzeugt, der im Wesentlichen dem Sollwert entspricht.

Das hierin beschriebene Verfahren kann dabei sowohl mit oder ohne Hysterese ausgeführt sein. Bevorzugt ist das hierin beschriebene Verfahren ohne Hysterese ausgeführt.

Durch das hierin beschriebene Verfahren kann insbesondere die Stromqualität eines Umrichters, insbesondere eines aktiven Gleichrichters, verbessert werden.

Sofern das hierin beschriebene Verfahren für einen generatorseitigen, aktiven Gleichrichter verwendet wird, kann die Qualität des Statorstromes des Generators erheblich verbessert werden, wodurch die Schallemissionen des Generators verringert werden.

Vorzugsweise wird die Verzerrungsgröße unter Berücksichtigung einer Regeldifferenz und/oder einer Datenbank ermittelt.

Die Verzerrungsgröße basiert also insbesondere auf einer Regeldifferenz, beispielsweise zwischen einem Soll-Wert und einem Ist-Wert, oder auf einem Look-Up-Table, wie hierin beschrieben.

Alternativ oder zusätzlich kann die Verzerrungsgröße auch verstärkt werden, bspw. um einen Faktor zwischen 2 und 10, insbesondere um die Signalqualität zu verbessern. Die Verstärkung wird dabei bevorzugt in Abhängigkeit des elektrischen Stranges der Windenergieanlage eingestellt, bspw. in Abhängigkeit einer Stator-Induktivität oder eines Statorwiderstandes.

Alternativ oder zusätzlich kann auch ein entsprechender Systemzustand und/oder ein Arbeitspunkt des Umrichters und/oder eines Generators und/oder ei-ner Windenergieanlage berücksichtigt werden, insbe-sondere um die Verzerrungsgröße zu ermitteln, beispielsweise durch ein Model, einen speziellen Filter oder die hierin beschriebene Datenbank.

Die Treibersignale werden dann bevorzugt entsprechend in Abhängigkeit der Verzerrungsgröße und/oder einem Modulationssignal und dem Trägersignal bestimmt.

Es wird also insbesondere auch vorgeschlagen, dass die Treibersignale durch Abgleich mit dem Trägersignal erzeugt werden, bspw. wie in Fig. 6 gezeigt.

Alternativ oder zusätzlich werden die Treibersignale in Abhängigkeit eines Offsets bestimmt, der insbesondere einen Arbeitspunkt des Umrichters berücksichtigt, beispielsweise durch eine Datenbank in Form eines Look-Up-Tables.

Es wird also auch vorgeschlagen, alternativ oder zusätzlich wenigstens einen Arbeitspunkt des aktiven Gleichrichters und/oder der Windenergieanlage zu berücksichtigen, insbesondere mittels eines Offsets und/oder einer Datenbank.

Der Offset kann beispielsweise in Form eines Kompensationswertes, wie eines Kompensationsstromes, sein, der einen Arbeitspunkt des aktiven Gleichrichters und/oder der Windenergieanlage berücksichtigt.

Bevorzugt wird der Offset offline bestimmt, bspw. durch Simulation oder Berechnung, und entsprechend in einer Steuereinheit eingestellt bzw. in einer entsprechenden Datenbank für die Steuereinheit hinterlegt.

Durch entsprechend genaue Wahl des Offsets kann die bleibende Regelabweichung (engl. steady state error) minimiert bzw. eliminiert werden.

Hierdurch kann insbesondere die Genauigkeit des vorgeschlagenen Verfahrens erhöht werden.

Vorzugsweise ist der Sollwert ein Strom-Sollwert, insbesondere für einen Strom eines elektrischen (Stator-)Systems eines Generators einer Windenergieanlage.

Das Verfahren ist also insbesondere als Stromregelung ausgeführt, bevorzugt für einen generatorseitigen, aktiven Gleichrichter einer Windenergieanlage.

Die Treibersignale werden zudem bevorzugt in Abhängigkeit eines Strom-Sollwertes, insbesondere für einen aktiven Gleichrichter, bestimmt.

Vorzugsweise ist das Trägersignal für den Umrichter zum Stellen eines einphasigen Stromes, bevorzugt eines elektrischen (Stator-)Systems eines Generators einer Windenergieanlage.

Es wird also insbesondere auch vorgeschlagen, dass mit dem hierin beschriebenen Verfahren die Statorströme eines Generators, insbesondere einer Windenergieanlage, bevorzugt einzeln, gestellt werden.

Insbesondere wird dabei vorgeschlagen, jede Phase eines (Stator-)Systems des Generators einzeln zu stellen.

Beispielsweise wird der Verzerrungsstrom für jede Phase einzeln ermittelt und mit dem Signal abgeglichen, um die Treibersignale entsprechend für jede Phase einzeln zu bestimmen.

Bevorzugt liegt der Verzerrungsstrom hierfür in abc-Koordinaten vor.

Vorzugsweise ist das Trägersignal durch einen Signalgenerator generiert, und weist wenigstens eine der nachfolgenden Formen auf: Dreieck, Sinus, Rechteck.

Das Signal zum Bestimmen der Treibersignale wird also bevorzugt durch einen Signalgenerator erzeugt, bspw. als Dreieck- oder Sägezahnfunktion.

Beispielsweise weist die Dreieckfunktion zwei symmetrische Flanken auf. Die Flanken steigen bspw. mit einem Winkel zwischen 30° und 60°, bevorzugt zwischen 40° und 50°, weiter bevorzugt ca. 45°.

Die Dreiecksfunktion kann aber auch unsymmetrisch sein, bspw. weist die ansteigende Flanke einen Winkel von ca. 45° auf und die abfallende Flanke einen Winkel von ca. 60°.

Die Sägezahnfunktion weist wenigstens eine Flanke von 90° auf, bspw. die ansteigende Flanke oder die absteigende Flanke. Die andere Flanke weist dann bspw. einen Winkel zwischen 30° und 60° auf, bevorzugt zwischen 40° und 50°, weiter bevorzugt ca. 45°. Die Steuergröße wird dann mit diesem Trägersignal abgeglichen, um die Treibersignale zu generieren.

Das vorstehend oder nachstehend beschriebene Verfahren ist also bevorzugt wie ein oder als ein Rampenvergleichsverfahren, bevorzugt mit einem Dreieck, ausgebildet.

Vorzugsweise weist das Trägersignal eine Amplitude und eine Frequenz auf.

Vorzugsweise weist die Verzerrungsgröße und/oder die erweiterte Verzerrungsgröße und/oder das Modulationssignal eine Amplitude und eine Frequenz auf, die insbesondere kleiner ist als die Amplitude und/oder die Frequenz des Trägersignals.

Beispielsweise ist die Amplitude des Trägersignals zweimal so groß, wie die Amplitude der Verzerrungsgröße.

Es wird also insbesondere vorgeschlagen, dass das Trägersignal eine größere Amplitude aufweist, als die Amplitude des Signals, mit dem es abgeglichen wird, also bspw. die Verzerrungsgröße oder die erweiterte Verzerrungsgröße oder das Modulationssignal.

In einer anderen Ausführungsform ist die Amplitude des Trägersignals auf 1 normiert, und die Amplituden des Signals, mit dem es abgeglichen wird, sind kleiner.

Alternativ oder zusätzlich ist die Amplitude des Trägersignals konstant oder wird variiert.

Alternativ oder zusätzlich wird auch vorgeschlagen, dass das Trägersignal eine Frequenz aufweist, bspw. zwischen 200Hz und 2500Hz, die größer ist als die Frequenz des Signals, mit dem es abgeglichen wird, also bspw. die Verzerrungsgröße oder die erweiterte Verzerrungsgröße oder das Modulationssignal.

Die Verzerrungsgröße weist bspw. eine Frequenz zwischen 10Hz und 200Hz auf, bspw. um die 50Hz oder 60Hz.

Vorzugsweise ist der Istwert ein Strom-Istwert, insbesondere für einen Strom eines elektrischen (Stator-)Systems eines Generators einer Windenergieanlage.

Bevorzugt wird der Strom-Istwert hierfür am Eingang des Umrichters, insbesondere am Eingang des aktiven Gleichrichters erfasst, insbesondere als dreiphasiger Wechselstrom.

Der Strom-Istwert kann bspw. für ein gesamtes System, bspw. ein dreiphasiges Statorsystem, als Gesamtstrom erfasst und/oder für jede Phase des Systems einzeln erfasst werden.

Bevorzugt wird der Strom-Istwert in abc-Koordinaten transformiert oder umgerechnet. Um den Strom-Istwert ferner mit dem Strom-Sollwert abzugleichen, wird der Strom-Sollwert bevorzugt in abc-Koordinaten transformiert und mit den abc-Koordinaten des Strom-Istwertes abgeglichen.

Vorzugsweise umfasst der Istwert sowohl ein dreiphasiges Gesamtsystem als auch eine jede Phase des Gesamtsystems.

Es wird also insbesondere auch vorgeschlagen, dass das Verfahren sowohl das gesamte dreiphasige (Stator-)System als auch jede Phase dieses Systems einzeln berücksichtigt.

Dies kann bspw. dadurch erfolgen, dass sowohl ein Abgleich im Gesamtsystem als auch ein Abgleich in jeder Phase vorgenommen wird. Hierfür kann bspw. der Ist-Wert mit einem Soll-Wert in d/q-Koordinaten abgeglichen werden und zusätzlich oder anschließend noch einmal in abc-Koordinaten.

Bevorzugt wird hierfür das Gesamtsystem als Summenstrom in d/q-Koordinaten erfasst.

Vorzugsweise ist der Sollwert und/oder die Verzerrungsgröße und/oder ein Kompensationswert und/oder ein Offset, insbesondere einer Datenbank, in d/q-Koordinaten oder liegt in diesen vor.

Es wird also insbesondere vorgeschlagen, das vorstehend oder nachstehend beschriebene Verfahren wenigstens teilweise in d/q-Koordinaten durchzuführen, insbesondere um das gesamte (Stator-)System zu berücksichtigen. Insbesondere wird wenigstens das Gesamtsystem als Summenstrom in d/q-Koordinaten berücksichtigt.

Zudem wird vorgeschlagen, dass wenigstens ein Kompensationswert und/oder ein Offset verwendet wird, um die Treibersignale für den Umrichter zu bestimmen. Der Kompensationswert kann beispielsweise über eine Regeldifferenz zwischen Soll- und Ist-Wert bestimmt werden. Bevorzugt wird der Kompensationswert über eine Regelung ermittelt. Der Offset kann hingegen beispielsweise in einer Datenbank hinterlegt sein. Bevorzugt wird der Offset dabei mittels einer Steuerung zur Verfügung gestellt.

Der Kompensationswert und der Offset haben dabei im Wesentlichen die gleiche Funktion, nämlich einen Arbeitspunkt und/oder Systemzustand des Umrichters und/oder des Generators und/oder der Windenergieanlage zu berücksichtigen.

Bevorzugt ist der Kompensationswert und/oder der Offset ein Stromwert, insbesondere in d/q-Koordinaten, insbesondere für einen Statorstrom eines Umrichters eine Windenergieanlage.

Zusätzlich kann auch ein weiterer Teil des vorstehend oder nachstehend beschriebenen Verfahrens in abc-Koordinaten durchgeführt werden, insbesondere um die einzelnen Phasen des (Stator-)Systems zu berücksichtigen.

Bevorzugt liegt der Istwert bzw. Strom-Istwert in abc-Koordinaten vor.

Durch eine Transformation des Ist- und des Sollwertes in d/q-Koordinaten kann das Verfahren zum einen deutlich vereinfacht werden und zum anderen kann hierdurch ein Regler zum Steuern des Umrichters, insbesondere des aktiven Gleichrichters, verwendet werden, der insbesondere keine bleibende Regelabweichung aufweist.

Der Abgleich mit dem Trägersignal erfolgt aber bevorzugt in abc-Koordinaten.

Vorzugsweise wird das vorstehend oder nachstehend beschriebene Verfahren für ein erstes elektrisches (Stator-)System eines Generators einer Windenergieanlage mit einem ersten Trägersignal durchgeführt, und parallel, insbesondere zeitgleich, dazu ebenfalls für ein zweites elektrisches (Stator-)System desselben Generators mit einem zweiten Träger-signal, wobei das erste Trägersignal und das zweite Trägersignal im Wesentlichen gleich ausgeführt sind, aber mit einem Phasenwinkel zu einander versetzt sind, wobei der Phasenwinkel insbesondere zwischen 30° und 120° beträgt, bevorzugt zwischen 80° und 100°, insbesondere um ca. 90°.

Es wird also insbesondere vorgeschlagen, das vorstehend oder nachstehend beschriebene Verfahren für einen Generator einer Windenergieanlage zu verwenden, der zwei, um bspw. 30°-versetzte, (Stator-)Systeme aufweist, die jeweils mit einem aktiven Gleichrichter verbunden sind, wobei die aktiven Gleichrichter zeitgleich mit dem hierin beschriebenen Verfahren betrieben werden, insbesondere mit im Wesentlichen gleichen Trägersignalen, welche aber phasenversetzt zueinander sind.

Bei parallelen (Stator-)Systemen wird das Verfahren also insbesondere mit Phasenversatz im Trägersignal durchgeführt.

Erfindungsgemäß wurde erkannt, dass insbesondere ein Phasenversatz von ca. 90° zu einem geräuscharmen Betrieb bei zwei parallelen (Stator-)Systemen führt.

Vorzugsweise wird das Trägersignal im laufenden Betrieb variiert, insbesondere mittels einer Rampen-Funktion in Abhängigkeit der Rotordrehzahl des Generators der Windenergieanlage, bspw. um einen Wert in einem Bereich zwischen 0 und 10 Prozent, bevorzugt ca. 5 Prozent.

Es wird also insbesondere auch vorgeschlagen, kein konstantes Trägersignal zu verwenden, sondern das Trägersignal zum Bestimmen der Treibersignale im laufenden Betrieb zu verändern, bevorzugt in Abhängigkeit einer Rotordrehzahl des Generators.

Besonders bevorzugt wird die Amplitude und/oder die Frequenz und/oder die Periode und/oder die Breite im laufenden Betrieb variiert, insbesondere um eine sogenannte Verschmierung des Frequenzbandes zu erzeugen.

Beispielsweise weist das Trägersignal eine variable Frequenz auf, die mit einer Rampen-Funktion variiert wird, bspw. um eine bestimmte Frequenz herum, insbesondere mit einer Periodendauer, die proportional, insbesondere indirekt proportional, der Polpaarzahl und/oder der Rotordrehzahl des Generators ist.

Hierdurch können insbesondere etwaige Oberwellen im Wechselstrom reduziert werden, insbesondere so, dass hierdurch kleinere oder gar keine Filter notwendig sind, um einen geräuscharmen Generatorbetrieb zu gewährleisten.

In einem Beispiel beträgt die Frequenz des Trägersignals zwischen 500 Hz und 2500 Hz, bspw. 700 Hz und wird um ca. 5 Prozent, also 35 Hz, variiert.

Erfindungsgemäß wird ferner ein Verfahren zum Steuern einer Windenergieanlage vorgeschlagen, umfassend die Schritte: Betreiben eines Umrichters der Windenergieanlage in einem ersten Betriebsmodus; und Betreiben des Umrichters der Windenergieanlagen in einem zweiten Betriebsmodus, wobei der Umrichter in dem zweiten Betriebsmodus mit einem Verfahren zum Steuern eines Umrichters betrieben wird, insbesondere wie hierin beschrieben.

Es wird also insbesondere vorgeschlagen, dass das hierin beschriebene Verfahren zum Steuern eines Umrichters bei einer Windenergieanlage zur Anwendung kommt, insbesondere in Form eines Betriebsmodus und/oder als Teil eines bestimmten Betriebsmodus der Windenergieanlage.

Bevorzugt kommt das hierin beschriebene Verfahren zum Steuern eines Umrichters nur in bestimmten Situationen oder Szenarien zum Einsatz, beispielsweise in der Nacht oder dergleichen, insbesondere dann, wenn die Schallemissionen der Windenergieanlage reduziert und/oder verändert werden müssen.

In dem ersten Betriebsmodus wird die Windenergieanlage bevorzugt normal oder leistungsoptimiert betrieben. Dies bedeutet insbesondere, dass die Windenergieanlage eine maximal mögliche (Wirk-)Leistung erzeugt. Bevorzugt arbeitet der Umrichter im ersten Betriebsmodus mit einem Toleranzbandverfahren, d.h. der Umrichter erzeugt den einzuspeisenden Strom unter Verwendung eines Toleranzbandes. Das Toleranzbandverfahren weist dabei bevorzugt konstante Bandgrenzen auf, also eine konstante obere Bandgrenze und eine konstante untere Bandgrenze. Die Bandgrenzen werden dabei insbesondere über eine bestimmte Zeit bewusst konstant bzw. gerade gehalten. Der erste Betriebsmodus kann auch als Normalbetriebsmodus bezeichnet werden. Im ersten Betriebsmodus wird die Windenergieanlage insbesondere nicht mit einem hierin beschriebenen Verfahren zum Steuern eines Umrichters betrieben, sondern mit einem anderen Verfahren.

In dem zweiten Betriebsmodus wird die Windenergieanlage insbesondere schallreduziert bzw. schalloptimiert betrieben. Dies bedeutet insbesondere, dass die Windenergieanlage einen bestimmten akustischen Grenzwert nicht überschreiten darf bzw. nicht überschreitet. In dem zweiten Betriebsmodus arbeitet der Umrichter insbesondere mit einem Verfahren, wie hierin beschrieben, also insbesondere mit einem Trägersignal, welches insbesondere zu modulierten und bevorzugt nicht-konstanten Bandgrenzen führt. In dem zweiten Betriebsmodus erzeugt die Windenergieanlage bevorzugt eine maximal mögliche (Wirk-)Leistung unter Berücksichtigung eines Grenzwertes einer akustischen Größe, insbesondere eines maximal erlaubten Schallpegels der Windenergieanlage und/oder des Generators.

Vorzugsweise erfolgt die Umschaltung von dem ersten Betriebsmodus in den zweiten Betriebsmodus mehrstufig und/oder über einen Zwischenbetrieb. Beispielsweise wird für die Umschaltung zunächst ein erstes Trägersignal verwendet, welches zu einer ersten Modulation des Stromes und/oder der Bandgrenzen führt, die geringer ist als die Modulation mit dem zweiten Trägersignal, welches für den zweiten Betriebsmodus ist. In dem Zwischenbetrieb wird der Umrichter also beispielsweise erst mit einem ersten Trägersignal und/oder mit einer ersten modulierten Bandgrenze für eine vorbestimmte Zeit betrieben und wird dann anschließend mit einem zweiten Trägersignal und/oder mit einer zweiten modulierten Bandgrenze betrieben. Der Zwischenbetrieb kann auch Bestandteil des zweiten Betriebsmodus sein. Der Zwischenbetrieb soll insbesondere eine weiche bzw. sanfte Umschaltung zwischen dem ersten Betriebsmodus und dem zweiten Betriebsmodus ermöglichen. Bevorzugt dauert der Zwischenbetrieb eine dabei vorbestimmte Übergangszeit, die kürzer ist als 10 Minuten, bevorzugt kürzer ist als 5 Minuten.

Vorzugsweise wird von dem ersten Betriebsmodus in den zweiten Betriebsmodus umgeschaltet, bevorzugt erst umgeschaltet, wenn die Windenergieanlage und/oder der Generator eine akustische Größe aufweist, die oberhalb eines vorbestimmten Grenzwertes liegt.

Es wird also insbesondere auch vorgeschlagen, dass die Windenergieanlage erst in einen schallreduzierten bzw. schalloptimierten Betrieb umschaltet, wenn ein vorbestimmter Grenzwert für eine akustische Größe überschritten worden ist.

Alternativ und/oder zusätzlich wird von dem ersten Betriebsmodus in den zweiten Betriebsmodus umgeschaltet, bevorzugt erst umgeschaltet, wenn eine Windenergieanlagensteuereinheit dies vorgibt.

Beispielsweise umfasst die Windenergieanlage einen Tag-Nacht-Betrieb und im Nachbetrieb wird der Umrichter der Windenergieanlage mit einem hierin beschriebenen Verfahren zum Steuern eines Umrichters betrieben. Aber auch andere Szenarien sind möglich, beispielsweise, weil der Windenergieanlagenbetreiber, der Windparkbetreiber oder der Netzbetreiber einen entsprechenden schallreduzierten Betrieb wünscht.

Erfindungsgemäß wird ferner ein Verfahren zum Steuern einer Windenergieanlage vorgeschlagen, umfassend die Schritte: Betreiben eines Umrichters der Windenergieanlagen in einem, insbesondere zweiten, Betriebsmodus, wobei der Umrichter in dem zweiten Betriebsmodus mit einem hierin beschriebenen Verfahren betrieben wird und/oder unter Verwendung einer hierin beschriebenen Datenbank.

Es wird also insbesondere vorgeschlagen, dass das hierin beschriebene Verfahren zum Steuern eines Umrichters bei einer Windenergieanlage zur Anwendung kommt, insbesondere unter Verwendung einer Datenbank, bevorzugt eines Look-Up-Tables. Die Datenbank umfasst dabei insbesondere Informationen, die verschiedene Arbeitspunkte des Generators und/oder des Umrichters und/oder der Windenergieanlage berücksichtigen, wie beispielsweise Rotordrehzahl, Stator Soll-Strom, Rotorposition oder dergleichen.

Die Datenbank wird also insbesondere für eine arbeitspunktabhängige Steuerung des Umrichters und somit des Generators und der Windenergieanlage verwendet.

Bevorzugt umfasst die Datenbank dabei Größen und/oder Variablen und/oder Parameter und/oder Betriebsparameter, die insbesondere zu einer festen Kompensation innerhalb der hierin beschriebenen Steuerung führen. Die Größen und/oder Variablen und/oder Parameter und/oder Betriebsparameter der Datenbank können beispielsweise durch eine Simulation und/oder einen Testbetrieb des Umrichters und/oder der Windenergieanlage ermittelt werden. Die Größen und/oder Variablen und/oder Parameter und/oder Betriebsparameter sind also als bestimmter und/oder berechneter Offset zu verstehen. Die Größen und/oder Variablen und/oder Parameter und/oder Betriebsparameter der Datenbank werden dabei insbesondere so bestimmt, dass der Generator und/oder die Windenergieanlage einen geringeren und/oder anderen Schall oder Vibrationen emittiert. Die Größen und/oder Variablen und/oder Parameter und/oder Betriebsparameter sind also bevorzugt schalloptimiert.

Es wird insbesondere also auch vorgeschlagen, dass für die Größen und/oder Variablen und/oder Parameter und/oder Betriebsparameter der Datenbank bestimmte Arbeitspunkte berücksichtigt werden.

Vorzugsweise ist der vorbestimmte Parameter und/oder der vorberechnete Offset für einen bestimmten Arbeitspunkt eines aktiven Gleichrichters und/oder des Generators der Windenergieanlage.

Vorzugsweise wird die Datenbank bzw. werden die vorbestimmten Parameter und/oder der vorberechnete Offset erst berücksichtigt, wenn die Windenergieanlage und/oder der Generator eine akustische Größe aufweist, die oberhalb eines vorbestimmten Grenzwertes liegt.

Es wird also insbesondere auch vorgeschlagen, dass die Windenergieanlage erst in einen schallreduzierten bzw. schalloptimierten Betrieb mittels der Datenbank umschaltet, wenn ein vorbestimmter Grenzwert für eine akustische Größe überschritten worden ist.

Alternativ und/oder zusätzlich werden die Datenbank bzw. die vorbestimmten Parameter und/oder der vorberechnete Offset erst berücksichtigt, wenn eine Windenergieanlagensteuereinheit dies vorgibt.

Beispielsweise umfasst die Windenergieanlage einen Tag-Nacht-Betrieb und im Nachtbetrieb wird der Umrichter der Windenergieanlage mit einem hierin beschriebenen Verfahren zum Steuern eines Umrichters betrieben. Aber auch andere Szenarien sind möglich, beispielsweise, weil der Windenergieanlagenbetreiber, der Windparkbetreiber oder der Netzbetreiber einen entsprechenden Betrieb wünscht.

Erfindungsgemäß wird ferner eine Windenergieanlage vorgeschlagen, umfassend einen Umrichter und eine Steuereinheit, wobei der Umrichter als Leistungsumrichter ausgebildet ist und mittels der Steuereinheit mit einem vorstehend oder nachstehend beschriebenen Verfahren betrieben wird.

Die Windenergieanlage ist bspw. als Auftriebsläufer mit horizontaler Drehachse ausgeführt und weist bevorzugt drei Rotorblätter an einem aerodynamischen Rotor auf der Luvseite auf.

Der mit dem aerodynamischen Rotor verbundene elektrische Strang der Windenergieanlage umfasst im Wesentlichen einen Generator, einen mit dem Generator verbundenen Umrichter und einen, mit dem Umrichter verbundenen (Netz-)Anschluss, um die Windenergieanlage bspw. an ein elektrisches Windparknetz oder ein elektrisches Versorgungsnetz anzuschließen.

Der Generator ist bevorzugt als Synchrongenerator ausgeführt, bspw. als fremd-erregter Synchrongenerator oder als permanent-erregter Synchrongenerator.

Der Umrichter ist bevorzugt als Leistungsumrichter ausgeführt. Dies bedeutet insbesondere, dass der Umrichter dazu verwendet wird, vom Generator erzeugte elektrische Leistung zu wandeln.

Der Umrichter ist ferner bevorzugt als Vollumrichter in der Windenergieanlage integriert. Dies bedeutet insbesondere, dass die gesamte, vom Generator erzeugte elektrische Leistung über den Umrichter geführt und somit von diesem gewandelt wird.

Der Umrichter ist bevorzugt als Wechselstrom-Umrichter, auch als AC/AC-Konverter bezeichnet, ausgebildet. Dies bedeutet insbesondere, dass der Umrichter wenigstens einen Gleichrichter und einen Wechselrichter aufweist. Besonders bevorzugt ist der Umrichter als Direktumrichter oder als Umrichter mit Gleichspannungszwischenkreis ausgeführt. In einer besonders bevorzugten Ausführungsform ist der Umrichter als back-to-back converter ausgeführt.

Vorzugsweise weist der Umrichter wenigstens einen generatorseitigen, aktiven Gleichrichter auf, der mittels einer vorstehend oder nachstehend beschriebenen Steuereinheit und/oder mittels eines vorstehend oder nachstehend beschriebenen Verfahrens gesteuert wird.

Vorzugsweise weist der Generator zwei, insbesondere um 30° versetzte, Statorsysteme auf, die jeweils mit einem aktiven Gleichrichter verbunden sind, die jeweils über eine Steuereinheit separat voneinander gesteuert werden.

Die Steuereinheiten arbeiten dabei insbesondere mit einem vorstehend oder nachstehend beschriebenen Verfahren, wobei die Verfahren insbesondere einen Phasenversatz im Trägersignal aufweisen, von bspw. ca. 90°.

Bevorzugt weist die Steuereinheit wenigstens einen ersten Betriebsmodus und einen zweiten Betriebsmodus auf, insbesondere wie hierin beschrieben.

Bevorzugt ist die Steuereinheit dazu eingerichtet, von dem ersten Betriebsmodus in den zweiten Betriebsmodus umzuschalten, insbesondere wenn der Generator und/oder die Windenergieanlage einen vorbestimmten Grenzwert, insbesondere akustischen Grenzwert, überschreitet, und ein Wechsel im Betriebsmodus vorgegeben wird, beispielsweise durch einen Netzbetreiber, einen Windparkbetreiber, einen Tag-Nacht-Wechsel oder dergleichen.

Bevorzugt umfasst die Steuereinheit wenigstens eine hierin beschriebene Datenbank und/oder ist mit einer hierin beschriebenen Datenbank verbunden.

Die vorliegende Erfindung ist nachfolgend anhand der begleitenden Figuren näher erläutert, wobei für gleiche oder ähnliche Bauteile oder Baugruppen dieselben Bezugszeichen verwendet werden.

Fig. 1 zeigt schematisch und exemplarisch eine perspektivische Ansicht einer Windenergieanlage in einer Ausführungsform.

Fig. 2 zeigt schematisch und exemplarisch einen Aufbau eines elektrischen Stranges einer Windenergieanlage in einer Ausführungsform.

Fig. 3 zeigt schematisch und exemplarisch den Aufbau eines Umrichters.

Fig. 4A zeigt schematisch und exemplarisch den Aufbau einer Steuereinheit eines Umrichters in einer Ausführungsform.

Fig. 4C zeigt schematisch und exemplarisch den Aufbau einer Steuereinheit eines Umrichters in einer weiter bevorzugten Ausführungsform.

Fig. 4D zeigt schematisch und exemplarisch ein Steuermodul einer Steuereinheit zum Variieren einer Frequenz des Signals.

Fig. 5 zeigt schematisch und exemplarisch den Ablauf eines Verfahrens zum Steuern eines Umrichters in einer Ausführungsform.

Fig. 6 zeigt schematisch und exemplarisch ein Bestimmen eines Treibersignals für den Umrichter in Abhängigkeit der Verzerrungsgröße und des Trägersignals

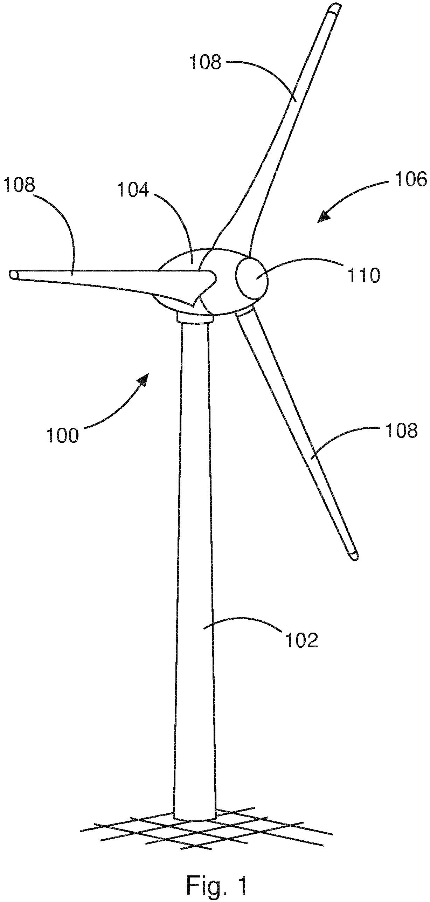

Fig. 1 zeigt schematisch und exemplarisch eine perspektivische Ansicht einer Windenergieanlage 100.

Die Windenergieanlage 100 ist als Auftriebsläufer mit horizontaler Achse und drei Rotorblättern 200 auf der Luvseite, insbesondere als Horizontalläufer, ausgebildet.

Die Windenergieanlage 100 weist einen Turm 102 und eine Gondel 104 auf.

An der Gondel 104 ist ein aerodynamischer Rotor 106 mit einer Nabe 110 angeordnet.

An der Nabe 110 sind, bevorzugt genau, drei Rotorblätter 108, insbesondere symmetrisch zur Nabe 110, angeordnet, bevorzugt um 120° versetzt.

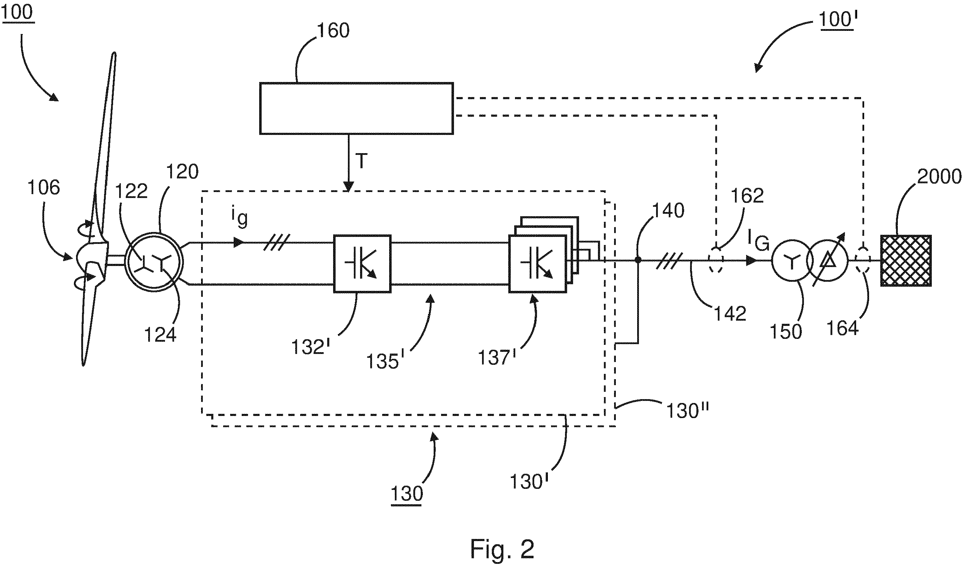

Fig. 2 zeigt schematisch und exemplarisch einen elektrischen Strang 100' einer Windenergieanlage 100, wie bevorzugt in Figur 1 gezeigt.

Die Windenergieanlage 100 weist einen aerodynamischen Rotor 106 auf, der mit einem Generator 120 der Windenergieanlage 100 mechanisch verbunden.

Der Generator 120 ist bevorzugt als 6-phasiger Synchrongenerator, insbesondere mit zwei dreiphasigen Systemen 122, 124, ausgebildet, die um 30 Grad phasenverschoben und voneinander entkoppelt sind.

Der Generator 120 ist über einen Umrichter 130 und mittels eines Transformators 150 mit einem elektrischen Versorgungsnetz 2000 verbunden bzw. an das elektrische Versorgungsnetz 2000 angeschlossen.

Um die vom Generator 120 erzeugte elektrische Leistung in einen einzuspeisenden Strom iG umzuwandeln, weist der Umrichter 130 für jedes der elektrischen Systeme 122, 124 wenigstens jeweils ein Umrichtermodul 130', 130" auf, wobei die Umrichtermodule 130', 130" im Wesentlichen baugleich ausgeführt sind.

Die Umrichtermodule 130', 130" weisen an einem Umrichtermoduleingang einen aktiven Gleichrichter 132' auf. Der aktive Gleichrichter 132' ist elektrisch mit einem Wechselrichter 137' verbunden, bspw. über eine Gleichspannungsleitung 135' oder einen Gleichspannungszwischenkreis.

Bevorzugt ist der Umrichter 130 bzw. sind die Umrichtermodule 130', 130" als Direkt-Umrichter (engl. back-to-back converter) ausgeführt.

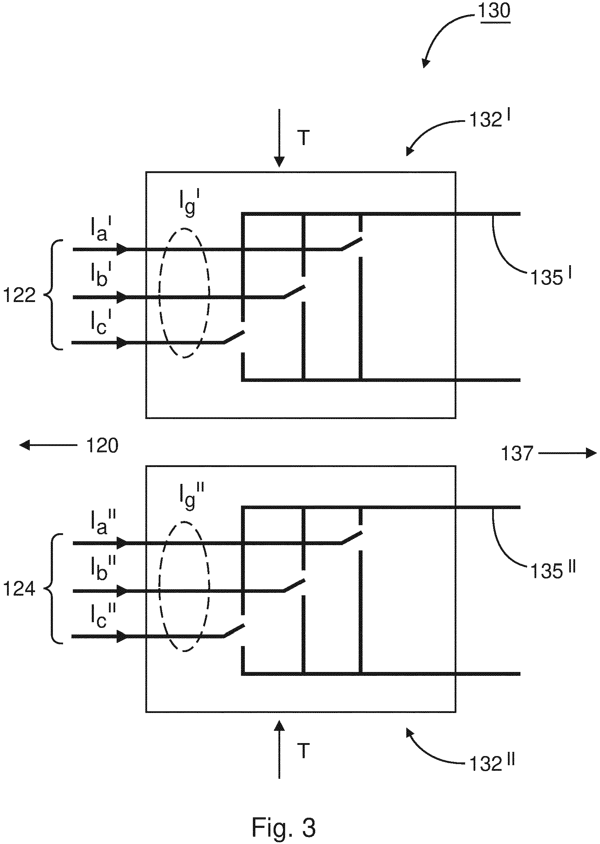

Die Funktionsweise der aktiven Gleichrichter 132', 133" des Umrichters 130 bzw. deren Ansteuerung ist insbesondere in Fig. 3 näher erläutert.

Die zwei statorseitig voneinander entkoppelten, elektrisch-dreiphasigen Systeme 122, 124 werden bspw. netzseitig an einem Knotenpunkt 140 zu einem dreiphasigen Gesamtsystem 142 zusammengeführt, welches den einzuspeisenden Gesamtstrom iG führt.

Um den einzuspeisenden Gesamtstrom iG in das elektrische Versorgungnetz 2000 einzuspeisen, ist ferner am Ausgang der Windenergieanlage ein Windenergieanlagentransformator 150 vorgesehen, der bevorzugt im Stern-Dreieck geschaltet ist und die Windenergieanlage 100 mit dem elektrischen Versorgungsnetz 2000 verbindet.

Das elektrische Versorgungsnetz 2000, an das die Windenergieanlage 100, 100' mittels des Transformators 150 angeschlossen ist, kann beispielsweise ein Windparknetz oder ein elektrisches Versorgungs- oder Verteilnetz sein.

Zum Steuern der Windenergieanlage 100 bzw. des elektrischen Stranges 100' ist ferner eine Windenergieanlagensteuereinheit 160 vorgesehen.

Die Windenergieanlagensteuereinheit 160 ist dabei insbesondere dazu eingerichtet, einen einzuspeisenden Gesamtstrom iG einzustellen, insbesondere durch Ansteuern der aktiven Gleichrichter 132', 132" bzw. Wechselrichter 137', 137".

Das Ansteuern der aktiven Gleichrichter 132', 132" erfolgt dabei insbesondere wie vorstehend oder nachstehend beschrieben, bevorzugt mittels oder in Abhängigkeit der Treibersignale T.

Die Windenergieanlagensteuereinheit 160 ist bevorzugt auch dazu eingerichtet, den Gesamtstrom iG mittels eines Stromerfassungsmittels 162 zu erfassen. Bevorzugt werden hierfür insbesondere die Ströme eines jeden Umrichtermoduls 137' in jeder Phase erfasst.

Zudem weist die Steuereinheit auch Spannungserfassungsmittel 164 auf, die dazu eingerichtet sind, eine Netzspannung, insbesondere des elektrischen Versorgungnetzes 2000, zu erfassen.

In einer besonders bevorzugten Ausführungsform ist die Windenergieanlagensteuereinheit 160 zudem dazu eingerichtet, auch den Phasenwinkel und die Amplitude des einzuspeisenden Stromes iG zu erfassen.

Die Windenergieanlagensteuereinheit 160 umfasst zudem eine vorstehend oder nachstehend beschriebene Steuereinheit 1000 für den Umrichter 130.

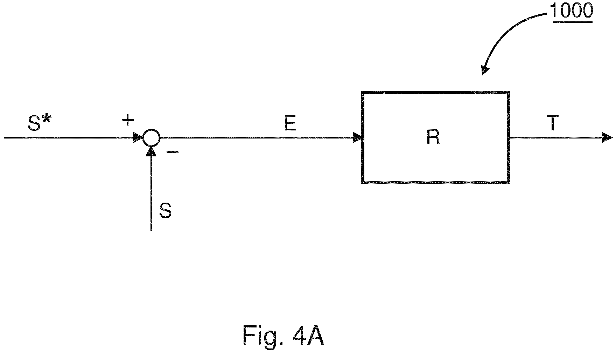

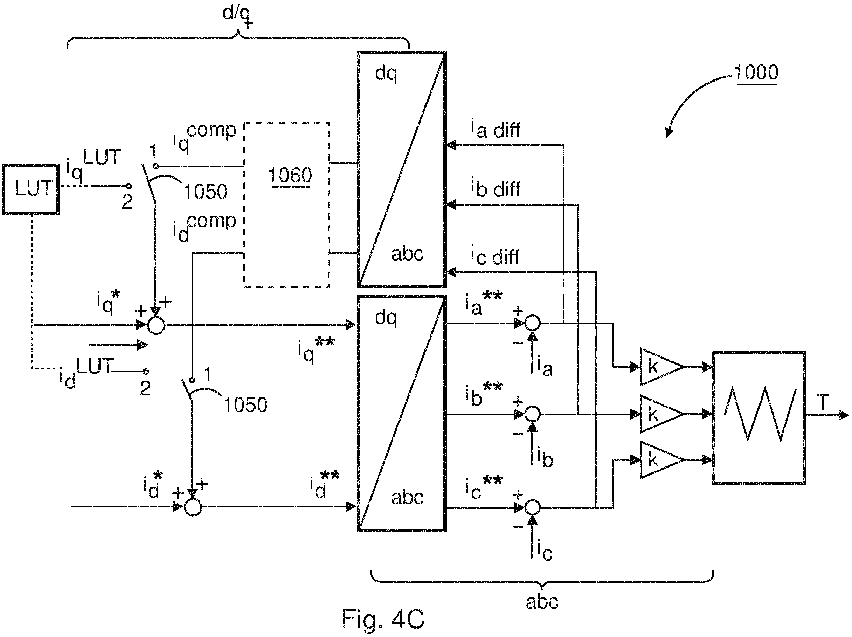

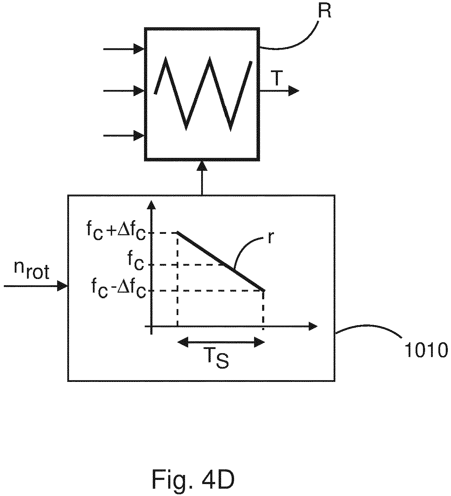

Die Steuereinheit 1000 ist also insbesondere dazu eingerichtet, den gesamten Umrichter 130 mit seinen zwei Umrichtermodulen 130', 130", insbesondere wie in Fig. 4 gezeigt, mit Treibersignalen T zu steuern.

Fig. 3 zeigt schematisch und exemplarisch den Aufbau eines Umrichters 130, insbesondere aktiver Gleichrichter 132', 132", wie in Fig. 2 gezeigt.

Der Umrichter 130 umfasst dabei insbesondere zwei aktive Gleichrichter 132', 132".

Einen ersten aktiven Gleichrichter 132' für ein bzw. das erste elektrisch, dreiphasige System 122 und einen zweiten aktiven Gleichrichter 132" für ein bzw. das zweite elektrisch, dreiphasige System 124.

Die aktiven Gleichrichter 132', 132" sind generatorseitig jeweils an ein System 122, 124 eines bzw. des Generators 120 angeschlossen und bspw. über eine Gleichspannung 135', 135" mit einem Wechselrichter 137', 137" verbunden, wie insbesondere in Fig. 2 gezeigt.

Die aktiven Gleichrichter 132', 132" werden jeweils mittels Treibsignalen T durch die vorstehend oder nachstehend beschriebene Steuereinheit 1000 und/oder durch ein vorstehend oder nachstehend beschriebenes Verfahren angesteuert, insbesondere um jeweils einen dreiphasigen Wechselstrom ia', ib', ic', ia", ib", ic" im Stator des Generators 120 einzuprägen.

Fig. 4A zeigt schematisch und exemplarisch den Aufbau einer Steuereinheit 1000 eines Umrichters 130, insbesondere für einen aktiven Gleichrichter 132', 132".

Die Steuereinheit 1000 ermittelt aus einem Sollwert S* und einem Istwert S eine Verzerrungsgröße E.

Der Sollwert S* und der Istwert S sind bevorzugt physikalische Größen des Umrichters, wie bspw. ein, vom aktiven Gleichrichter 132' 132" zu erzeugender Wechselstrom.

Die Verzerrungsgröße E wird aus dem Sollwert und dem Istwert ermittelt, bevorzugt mittels einer Differenz. Die Verzerrungsgröße kann daher auch als Regelabweichung (engl. error) oder Messabweichung bezeichnet werden. Sofern der Sollwert S* ein Sollstrom ist und der Istwert S ein Iststrom ist, kann die Verzerrungsgröße E auch als Verzerrungsstrom bezeichnet werden. Bevorzugt wird die Differenz aus abc-Koordinaten ermittelt, insbesondere wie Fig. 4C gezeigt.

Die Verzerrungsgröße E, insbesondere der Verzerrungsstrom, wird mit einem Signal R, bspw. einem Rampensignal, abgeglichen, um die Treibersignale T für den Umrichter 130, insbesondere den aktiven Gleichrichter 132', 132", zu erzeugen.

Bspw. kann die Verzerrungsgröße E mit dem Trägersignal R funktional derart abgeglichen werden, dass ein jeder Schnittpunkt zwischen Verzerrungsgröße E und Trägersignal R als Triggerpunkt für ein Treibersignal T verwendet wird, insbesondere wie in Fig. 6 gezeigt.

Das Trägersignal R kann hierfür bspw. als Dreieckssignal ausgebildet sein, insbesondere mit oder ohne Hysterese.

Die Steuereinheit 1000 ist also insbesondere als (Rampen-)Vergleichssteuerung (engl. ramp comparison controller) ausgeführt.

Fig. 4C zeigt schematisch und exemplarisch den Aufbau einer Steuereinheit eines Umrichters in einer weiter bevorzugten Ausführungsform, insbesondere für einen aktiven Gleichrichter 132', 132".

Die Steuereinheit 1000 ist im Wesentlichen wie in Fig. 4A aufgebaut, wobei der Sollwert S*, der Kompensationswert i_compd, i_compq und die Parameter $i_d$_LUT, $i_q$_LUT in d/q-Koordinaten vorliegen und der Istwert S in abc-Koordinaten vorliegt.

Der Sollwert S* ist ein Strom-Sollwert $i_d$*, $i_q$* in d/q-Koordinaten. Der Kompensationswert i id_comp, iq_comp ist ebenfalls ein Stromwert und basiert auf einer Regeldifferenz $i_{a\_diff}$, ib _diff, ic _diff und/oder auf einem Parameter $i_d$_LUT, $i_q$_LUT einer Datenbank LUT.

Die d-Komponente des Soll-Stromes id* und die q-Komponente des Soll-Stromes iq* werden zunächst in abc-Koordinaten transformiert. Anschließend wird eine Regeldifferenz $i_{a\_diff}$, ib _diff, ic _diff aus den in abc-Koordinaten transformierten Soll-Strömen $i_a$**, $i_b$**, $i_c$** und den Ist-Werten $i_a$, $i_b$, $i_c$, ermittelt, insbesondere für jede Koordinate a, b, c einzeln.

Diese Regeldifferenz $i_{a\_diff}$, ib _diff, ic _diff wird zurück in d/q-Koordinaten transformiert, um daraus die Kompensationswerte id_comp, iq_comp zu bestimmen. Zum Bestimmen der Kompensationswerte id_comp, iq_comp wird bevorzugt ein Filter 1060 verwendet.

In einer Ausführungsform werden die Kompensationswerte id_comp, iq_comp dazu verwendet, die Soll-Werte $i_d$*, $i_q$* in eine Verzerrungsgröße id**, iq** zu wandeln, welche in abc-Koordinaten transformiert und dazu verwendet werden, die Treibersignale T unter Verwendung eines Trägersignals R zu bestimmen.

In einer anderen Ausführungsform werden die Parameter $i_d$_LUT, $i_q$_LUT der Datenbank dazu verwendet, die Soll-Werte $i_d$*, $i_q$* in eine Verzerrungsgröße id**, iq** zu wandeln, welche in abc-Koordinaten transformiert und dazu verwendet werden, die Treibersignale T unter Verwendung eines Trägersignals R zu bestimmen.

Durch die Kompensationswerte id_comp, iq_comp bzw. die Parameter $i_d$_LUT, $i_q$_LUT kann der, durch den aktiven Gleichrichter erzeugte Strom $i_a$, $i_b$, $i_c$ optimiert, insbesondere schalloptimiert, werden.

In einer bevorzugten Ausführungsform wählt die Steuereinheit 1000 je nach Betriebsmodus des Umrichters und/oder der Windenergieanlage zwischen den Kompensationswerten id_comp, iq_comp oder den Parametern id_LUT, iq_LUT der Datenbank LUT. Hierfür weist die Steuereinheit 1000 beispielsweise eine Regelumschaltung 1050 auf. Die Steuereinheit 1000 weist somit sowohl eine Steuerung auf Basis einer Datenbank LUT auf, als auch eine Regelung auf Basis einer Regeldifferenz. Und je nach Betriebsmodus kann die Steuereinheit zwischen der Steuerung und der Regelung wählen.

Die Steuergrößen id**, iq** bilden insbesondere die Gesamtregelabweichung eines (Stator-)Systems des Generators ab, und werden in abc-Koordinaten ia**, ib**, ic** entsprechend der Phasen a, b, c des Systems zerlegt und mit den Ist-Strömen ia, ib, ic der jeweiligen Phase a, b, c abgeglichen, anschließend ggf. verstärkt und mit einem Dreieckssignal R abgeglichen, insbesondere um die Treibersignale T für die Schalter des aktiven Gleichrichters zu bestimmen.

Bevorzugt weist jedes elektrische System 122, 124 einen aktiven Gleichrichter 132', 132" auf, der jeweils durch eine vorstehend oder nachstehend beschriebene Steuereinheit 1000 mittels der Treibersignale T gesteuert wird.

Fig. 4D zeigt schematisch und exemplarisch ein Steuermodul 1010 einer Steuereinheit 1000 zum Variieren einer Frequenz des Signals.

Das Steuermodul 1010 ist dazu eingerichtet, die Frequenz $f_R$ des Signals R zu verändern, bspw. in einem vorbestimmten Frequenzbereich Δf.

Dies kann bspw. mittels einer Rampe r erfolgen.

Die Steilheit bzw. der Anstieg der Rampe r richtet sich dabei nach dem vorbestimmten Frequenzbereich Δf und der Periodendauer der Statorströme $T_s$, bspw. in Abhängigkeit der Polpaarzahl p des Generators und/oder der Rotordrehzahl $n_{rot}$ des Generators, bevorzugt durch

$$T_s = \frac{60}{n_{rot}*p}.$$

Beispielsweise beträgt die Rotordrehzahl ca. 7,7 rpm und die Polpaarzahl des Generators 57, dann beträgt die Periodendauer der Statorströme ca. 136,7 ms.

In einer bevorzugten Ausführungsform, und sofern der Generator zwei (Stator-)Systeme aufweist, wird für beide Systeme diese Frequenzänderung bzw. Verschmierung gewählt.

Die Frequenzvariation für die Verschmierung beträgt bspw. 5% von der Frequenz des Trägersignals. Weist das Trägersignal bspw. eine Frequenz von 700Hz auf, so beträgt die Frequenzvariation für die Verschmierung 35Hz.

Es wird also insbesondere auch vorgeschlagen, bei mehreren Systemen die gleiche Verschmierung zu wählen.

Fig. 5 zeigt schematisch und exemplarisch den Ablauf eines Verfahrens 500 zum Steuern eines Umrichters130, insbesondere eines aktiven Gleichrichters 132', 132", in einer Ausführungsform.

Zunächst wird der Umrichter in einem ersten Betriebsmodus MODE1 betrieben, beispielsweise in leistungsoptimierten Betriebsmodus MODE1. Dies ist durch Block 505 angedeutet.

Sofern dann beispielsweise die Windenergieanlage einen vorbestimmten Grenzwert für eine akustische Größe überschreitet, wird in einen zweiten Betriebsmodus MODE2 umgeschaltet, insbesondere wie hierin beschrieben.

Der zweite Betriebsmodus MODE2 ist beispielsweise schalloptimiert, und wird insbesondere wie nachstehend beschrieben ausgeführt.

In einem ersten Schritt 510 des zweiten Betriebsmodus MODE2, wird wenigstens ein Sollwert S* für den Umrichter 130 vorgegeben, bevorzugt ein Strom-Sollwert in d/q-Koordinaten.

Zudem wird in einem weiteren Schritt 520 des zweiten Betriebsmodus MODE2 ein Trägersignal R für den Umrichter 130 vorgegeben, bevorzugt ein sagezahnförmiges Signal.

Anschließend wird in einem weiteren Schritt 530 des zweiten Betriebsmodus MODE2, ein Istwert S erfasst, insbesondere ein Strom-Istwert des Umrichters 130, bevorzugt in abc-Koordinaten.

Aus dem so vorgegeben Sollwert S* und dem so erfassten Istwert S wird dann in einem weiteren Schritt 540 eine Verzerrungsgröße E ermittelt, insbesondere wie in den Figuren 4A und 4C gezeigt. Bevorzugt wird die Verzerrungsgröße E unter Verwendung eines Kompensationswertes COMP und/oder eines Offsets ermittelt. Bevorzugt wird der Kompensationswert COMP durch eine Regelung bestimmt und der Offset durch eine Datenbank vorgegeben.

Aus der so ermittelten Verzerrungsgröße E und dem Signal R, wird bspw. durch Abgleich, ein Treibersignal T für den Umrichter 130, und insbesondere für die Schalter des Umrichters 130, bestimmt. Dies ist durch den Block 550 angedeutet.

Fig. 6 zeigt schematisch und exemplarisch ein Bestimmen eines Treibersignals T für den Umrichter in Abhängigkeit der Verzerrungsgröße E und des Trägersignals R.

Das Trägersignal T ist wie vorstehend oder nachstehend beschrieben ausgeführt.

Insbesondere weist das Trägersignal R eine Amplitude R^ und eine Frequenz fR auf.

Mit diesem Trägersignal R wird bspw. die Verzerrungsgröße E abgeglichen, um entsprechende Treibersignale T zu erzeugen.

Die Verzerrungsgröße E ist ebenfalls wie vorstehend oder nachstehend beschrieben ausgeführt.

Insbesondere weist die Verzerrungsgröße E eine Amplitude E^ und eine Frequenz fE auf.

Beispielsweise wird zum Bestimmen der Treibersignale T ein Trägersignal R in Form eines Dreiecks und die Verzerrungsgröße E verwendet.

Das Trägersignal T weist bspw. eine Frequenz von ca. 700Hz auf. Die Verzerrungsgröße bspw. eine Frequenz von ca. 50Hz. Zudem ist die Amplitude des Trägersignals wenigstens doppelt so groß, wie die Amplitude der Verzerrungsgröße.

Ist der aktuelle Wert der Verzerrungsgröße E größer als das Trägersignal R, ist das Treibersignal T gleich 1 und entsprechend ein Schalter des Umrichters auf Position 1, also bspw. eingeschaltet.

Unterschreitet dann bspw. die Verzerrungsgröße E das Trägersignal R zum Zeitpunkt t1, so wird das Treibersignal T gleich 0 und der entsprechende Schalter des Umrichters wird auf Position 0 geschaltet, also bspw. ausgeschaltet.

Überschreitet dann die Verzerrungsgröße E das Trägersignal R zum Zeitpunkt t2 wieder, so wird das Treibersignal T gleich 1 und der entsprechende Schalter des Umrichters wird wieder auf Position 1 geschaltet.

Zu den Zeitpunkten t3 und t4 wird dann entsprechend verfahren.

Das Bestimmen der Treibersignale T kann aber auch entsprechend mit der hierin beschriebenen erweiterten Verzerrungsgröße E* oder dem hierin beschriebenen Modulationssignal U durchgeführt werden.

## Patentansprüche

1. Verfahren zum Steuern eines Umrichters (130), bevorzugt eines generatorseitigen, aktiven Gleichrichters (132', 132") eines Leistungsumrichters einer Windenergieanlage (100), umfassend:

   - Vorgeben eines Sollwertes (S*) für den Umrichter (130);
   - Vorgeben eines Trägersignals (R) für den Umrichter (130);
   - Erfassen eines Istwertes (S);
   - Ermitteln einer Verzerrungsgröße (E) aus dem Sollwert (S*) und dem Istwert (S); und
   - Bestimmen von Treibersignalen (T) für den Umrichter in Abhängigkeit der Verzerrungsgröße (E) und des Trägersignals (R).

2. Verfahren zum Steuern eines Umrichters (130) nach Anspruch 1, wobei

   - die Verzerrungsgröße (E) unter Berücksichtigung einer Regeldifferenz (DIFF) und/oder einer Datenbank (LUT) ermittelt wird.

3. Verfahren zum Steuern eines Umrichters (130) nach Anspruch 1 oder 2, wobei

   - die Treibersignale (T) durch einen Abgleich der Verzerrungsgröße (E) und/oder eines Modulationssignals (U), das auf der Verzerrungsgröße (E) und optional dem Istwert (S) basiert, mit dem Trägersignal (R) erstellt werden.

4. Verfahren zum Steuern eines Umrichters (130) nach einem der vorstehenden Ansprüche, wobei

   - die Treibersignale (T) in Abhängigkeit eines, insbesondere vorberechneten, Offsets (A) bestimmt werden, der insbesondere einen Arbeitspunkt berücksichtigt.

5. Verfahren zum Steuern eines Umrichters (130) nach einem der vorstehenden Ansprüche, wobei

   - der Sollwert (S*) ein Strom-Sollwert (isoll) ist, insbesondere für einen Strom (ig, ia, ib, ic) eines elektrischen (Stator-)Systems (122,124) eines Generators (120) einer Windenergieanlage (100).

6. Verfahren zum Steuern eines Umrichters (130) nach einem der vorstehenden Ansprüche, wobei

   - das Trägersignal (R) für den Umrichter (130) zum Stellen eines einphasigen Stromes (ia, ib, ic) ist, bevorzugt eines elektrischen (Stator-)Systems (122,124) eines Generators (120) einer Windenergieanlage (100).

7. Verfahren zum Steuern eines Umrichters (130) nach einem der vorstehenden Ansprüche, wobei

   - das Trägersignal (R) durch einen Signalgenerator generiert wird, und wenigstens eine der nachfolgenden Formen aufweist:

      - Dreieck;
      - Sinus;
      - Rechteck.

8. Verfahren zum Steuern eines Umrichters (130) nach einem der vorstehenden Ansprüche, wobei

   - der Istwert (S) ein Strom-Istwert (iist) ist, insbesondere für einen Strom (ia, ib, ic) eines elektrischen (Stator-)Systems (122,124) eines Generators (120) einer Windenergieanlage (100).

9. Verfahren zum Steuern eines Umrichters (130) nach einem der vorstehenden Ansprüche, wobei

   - der Sollwert (id*, iq*) und/oder die Verzerrungsgröße (id**, iq**) und/oder ein Kompensationswert (i_compd, i_compq) in d/q-Koordinaten ist oder vorliegt und/oder
   - der Istwert (ia, ib, ic) in abc-Koordinaten vorliegt.

10. Verfahren zum Steuern einer Windenergieanlage, umfassend die Schritte:

- Betreiben eines Umrichters der Windenergieanlage in einem ersten Betriebsmodus; und
- Betreiben des Umrichters der Windenergieanlagen in einem zweiten Betriebsmodus, wobei der Umrichter in dem zweiten Betriebsmodus mit einem Verfahren nach einem der Ansprüche 1 bis 9 betrieben wird.

11. Verfahren zum Steuern einer Windenergieanlage nach Anspruch 10, wobei

- der Umrichter im ersten Betriebsmodus mit einem Toleranzbandverfahren betrieben wird und/oder nicht mit einem Verfahren nach einem der Ansprüche 1 bis 9 betrieben wird.

12. Verfahren zum Steuern einer Windenergieanlage nach Anspruch 10 oder 11, wobei

- der Umrichter in dem ersten Betriebsmodus mit konstanten Bandgrenzen betrieben wird und/oder der Umrichter in dem zweiten Betriebsmodus mit modulierten Bandgrenzen betrieben wird.

13. Verfahren zum Steuern einer Windenergieanlage nach einem der Ansprüche 10 bis 12, wobei

- der Umrichter in dem zweiten Betriebsmodus erst mit einem ersten Trägersignal und/oder einer ersten modulierten Bandgrenze für eine vorbestimmte Zeit betrieben wird und dann schließend mit einem zweiten Trägersignal und/oder einer zweiten modulierten Bandgrenze betrieben wird.

14. Verfahren zum Steuern einer Windenergieanlage nach einem der Ansprüche 10 bis 13, wobei

- von dem ersten Betriebsmodus in den zweiten Betriebsmodus umgeschaltet wird, insbesondere wenn:

a) die Windenergieanlage und/oder der Generator eine akustische Größe aufweist, die oberhalb eines vorbestimmten Grenzwertes liegt und/oder
b) eine Windenergieanlagensteuereinheit dies vorgibt.

15. Windenergieanlage (100) umfassend:

- einen Umrichter (130) und
- eine Steuereinheit (1000), wobei
- der Umrichter (130) als Leistungsumrichter ausgebildet ist und mittels der Steuereinheit (1000) mit einem Verfahren nach einem der Ansprüche 1 bis 9 und/oder 11 bis 14 betrieben

wird.

Fig. 1

Fig. 2

$\underline{130}$

$132^{\mathrm{I}}$

T

$I_g{}^{\mathrm{I}}$

$I_a{}^{\mathrm{I}}$

$I_b{}^{\mathrm{I}}$

122

$I_c{}^{\mathrm{I}}$

$135^{\mathrm{I}}$

120

137

$132^{\mathrm{II}}$

$I_g{}^{\mathrm{II}}$

$I_a{}^{\mathrm{II}}$

$I_b{}^{\mathrm{II}}$

124

$I_c{}^{\mathrm{II}}$

$135^{\mathrm{II}}$

T

Fig. 3

Fig. 4A

Fig. 4C

Fig. 4D

Fig. 5

Fig. 6

Europäisches
Patentamt

European
Patent Office

Office européen
des brevets

**EUROPÄISCHER RECHERCHENBERICHT**

Nummer der Anmeldung

EP 22 19 1995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S60 187292 A (MITSUBISHI ELECTRIC CORP) 24. September 1985 (1985-09-24) | 1-9 | INV. H02M7/219 |
| Y | * Abbildungen 1,3,4 * * Maschinenübersetzung: Absätze 3-7 vom Ende aus gezählt * | 10-15 | H02M1/00 ADD. H02M5/458 |
| X | ES 2 371 845 A1 (UNIV MADRID POLITECNICA [ES]) 10. Januar 2012 (2012-01-10) | 1-9 | H02P25/22 H02P27/10 |
| Y | * Abbildungen 4,5 * ----- | 10-15 | |
| X | JP H06 351264 A (FANUC LTD) 22. Dezember 1994 (1994-12-22) | 1-9 | |
| Y | * Abbildung 2 * ----- | 10-15 | |
| Y | JAYANTHI P ET AL: "LVRT capability enhancement in the grid-connected DFIG-driven WECS using adaptive hysteresis current controller", ENVIRONMENT, DEVELOPMENT AND SUSTAINABILITY, SPRINGER NETHERLANDS, DORDRECHT, Bd. 24, Nr. 6, 5. August 2021 (2021-08-05) , Seiten 7593-7621, XP037833422, ISSN: 1387-585X, DOI: 10.1007/S10668-021-01684-7 [gefunden am 2021-08-05] * Abbildung 8 * * Section 4.2.3 * ----- | 10-15 | RECHERCHIERTE SACHGEBIETE (IPC) H02M H02P |

Der vorliegende Recherchenbericht wurde für alle Patentansprüche erstellt

| Recherchenort | Abschlußdatum der Recherche | Prüfer |
|---|---|---|
| Den Haag | 28. März 2023 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 19 1995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2023

| Im Recherchenbericht angeführtes Patentdokument | Datum der Veröffentlichung | Mitglied(er) der Patentfamilie | Datum der Veröffentlichung |
|---|---|---|---|
| JP S60187292 A | 24-09-1985 | KEINE | |
| ES 2371845 A1 | 10-01-2012 | ES 2371845 A1 | 10-01-2012 |
| | | WO 2012168521 A1 | 13-12-2012 |
| JP H06351264 A | 22-12-1994 | KEINE | |

Für nähere Einzelheiten zu diesem Anhang : siehe Amtsblatt des Europäischen Patentamts, Nr.12/82

EPO FORM P0461